# EUROPÄISCHE PATENTSCHRIFT

(11) **EP 3 804 459 B1**
(45) Veröffentlichungstag und Bekanntmachung des Hinweises auf die Patenterteilung: **18.12.2024**
(21) Anmeldenummer: 19726678.6
(22) Anmeldetag: 24.05.2019
(51) Int. Cl.: H05B 1/02, G01F 23/26

(54) **FLUIDHEIZER**
FLUID HEATER
APPAREIL DE CHAUFFAGE D'UN FLUIDE

(30) Priorität: 24.05.2018 DE 102018112471
(43) Veröffentlichungstag der Anmeldung: 14.04.2021
(73) Patentinhaber: DBK David + Baader GmbH, Nordring 26 76761 Rülzheim (DE)
(72) Erfinder: KRÄMER, Alexander, 76899 Kapsweyer (DE); STRATMANN, Andreas, 72401 Haigerloch (DE); RIEHLING, Achim, 76879 Bornheim (DE)
(74) Vertreter: Winter, Brandl - Partnerschaft mbB
(86) Internationale Anmeldenummer: PCT/EP2019/063472
(87) Internationale Veröffentlichungsnummer: WO 2019/224357

(56) Entgegenhaltungen:
- EP-A1- 1 661 544
- EP-A2- 1 559 391
- GB-A- 2 358 789
- US-A1- 2005 045 621
- US-A1- 2006 162 719
- US-A1- 2016 242 598
- US-B1- 9 801 482

## Beschreibung

Die Erfindung betrifft einen Fluidheizer gemäß dem Oberbegriff des Patentanspruches 1.

Ein Grundaufbau eines derartigen Fluidheizers ist beispielsweise in der EP 2 499 436 B1 der Anmelderin offenbart. Der in dieser Druckschrift offenbarte Fluidheizer hat ein Gehäuse, in dem ein Heizelement in Form eines gewendelten Rohrheizkörpers aufgenommen ist. Beim dargestellten Ausführungsbeispiel ist das Heizelement als Drahtwiderstandsheizelement ausgebildet. Das Gehäuse ist mit einem Zulauf und einem Ablauf für das zu erwärmende Fluid ausgeführt. An eine Deckfläche des Fluid führenden Gehäuses ist ein Elektronikgehäuse angesetzt, das die Leistungselektronik zur Ansteuerung des Rohrheizkörpers aufnimmt. Bei mehrstufigen Fluidheizern sind mehrere derartiger Heizelemente/Rohrheizkörper vorgesehen, die dann entsprechend über die Leistungselektronik angesteuert werden.

Eine Anforderung an derartige Fluidheizer mit Drahtwiderstandsheizelementen ist, dass ein Überhitzen des Fluidheizers bzw. der Heizelemente bei einem Trockenlaufen des Wasserheizers zuverlässig verhindert werden muss. Dazu kann beispielsweise die Temperatur im Fluidheizer über geeignete Temperatursensoren erfasst werden und dann über die Leistungselektronik bei Überschreiten einer vorgegebenen Maximaltemperatur das Heizelement abgeschaltet oder heruntergeregelt werden.

Eine alternative Möglichkeit besteht darin, den Füllstand des Fluidheizers zu erfassen und das Heizelement nur dann anzusteuern, wenn ein hinreichender Füllstand des Mediums - üblicher Weise mit Glykol versetztes Wasser - gewährleistet ist.

Zur Erfassung des Füllstandes können beispielsweise kapazitive Sensoren verwendet werden, die in das Fluidgehäuse eingesetzt werden. Nachteilig bei einer derartigen Lösung ist, dass der Füllstand nur lokal an der Position des Sensors erfassbar ist, so dass ein partieller Trockenlauf in anderen Bereichen nicht sicher erkannt werden kann. Zudem sind die kapazitiven Sensoren relativ teuer und es bedarf auch eines vergleichsweise hohen Aufwandes, um das Gehäuse des Fluidheizers im Hinblick auf die Positionierung des Sensors in geeigneter Weise auszubilden.

Die Druckschriften US 2005/045621 A1 und EP 1 559 391 A2 offenbaren verwandten Stand der Technik.

Demgegenüber liegt der Erfindung die Aufgabe zugrunde, einen Fluidheizer zu schaffen, bei dem ein Überhitzen mit geringem vorrichtungstechnischem Aufwand vermieden wird.

Diese Aufgabe wird durch einen Fluidheizer mit den Merkmalen des Patentanspruches 1 gelöst.

Vorteilhafte Weiterbildungen der Erfindung sind Gegenstand der Unteransprüche.

Der erfindungsgemäße Fluidheizer hat ein von einem Fluid durchströmtes Gehäuse, in dem ein Heizelement zum Heizen des Fluids aufgenommen ist. Die Messung des Füllstandes erfolgt durch Ausnutzung ohnehin schon vorhandener Komponenten dadurch, dass zueinander beabstandete gehäuseseitige und heizelementseitige Komponenten eine Elektrode bzw. eine Gegenelektrode eines Kondensators ausbilden. Das Dielektrikum des Kondensators wird insbesondere durch das zu erwärmende Fluid gebildet. Der Kondensator ist derart verschaltet, dass aus einer Kapazitätsänderung dieses integrierten Kondensators der Füllstand des Fluids ermittelbar ist.

Die Dielektrizitätskonstanten von Luft (leergelaufener Raum) und Fluid sind unterschiedlich, so dass in Abhängigkeit vom Füllstand eine Kapazitätsänderung des Kondensators erfolgt. Eine Leistungselektronik mit entsprechendem Softwarealgorithmus kann dann das erfasste Signal auswerten und eine entsprechende Warnung oder Füllstandsinformation generieren oder aber die Leistung der Heizelemente herunterfahren. Eine derartige Lösung hat den Vorteil, dass eine quantitative Füllstandsüberwachung ermöglicht ist. Des Weiteren ist durch die Verbindung ohnehin vorhandener Komponenten der Aufbau äußerst kostengünstig, wobei die Erfassung des Füllstandes lageunabhängig und mit einer schnellen Reaktionszeit erfolgt. Diese schnelle Reaktionszeit ist besonders wichtig, um ein Überhitzen des Systems, das zum Teil auch aus Kunststoff bestehen kann, zu vermeiden.

Mit anderen Worten gesagt, die Veränderung des Füllstandes resultiert in einer Veränderung der Kondensatorkapazität, so dass entsprechend bei Unterschreiten eines Grenzwertes auf ein partielles oder allgemeines Trockenlaufen des Fluidheizers geschlossen werden kann und dementsprechend das Heizelement abgeschaltet oder heruntergeregelt werden kann bis der vorbestimmte Füllstand erreicht ist.

Bei einem Ausführungsbeispiel der Erfindung ist die eine Elektrode/Gegenelektrode ausbildende gehäuseseitige Komponente eine Gehäusewandung, vorzugsweise eine Gehäuseschale oder ein Innenrohr, das vom Heizelement umgriffen ist.

Die eine Elektrode/Gegenelektrode ausbildende heizelementseitige Komponente kann eine metallische Umhüllung oder ein Heizdraht eines als Rohrheizkörper ausgeführten Heizelementes sein.

Selbstverständlich sind auch andere Komponenten des Heizelementes verwendbar, bzw. Komponenten von Heizelementen, die andere Bauformen aufweisen.

Bei einer bevorzugten Ausführung der Erfindung ist die Gehäusewandung aus Kunststoff ausgeführt, wobei die Leitfähigkeit dann dadurch erreicht wird, dass die Gehäusewandung mit einer Elektrodenbeschichtung oder einer Elektrodenplatte (beispielsweise als Blech, Folie, Metallnetz ausgeführt) versehen ist.

Die Elektroden und Gegenelektroden des aus den Komponenten des Fluidheizers gebildeten Kondensators können auch so verschaltet sein, dass sie zwei oder mehr in Reihe geschaltete Kondensatoren ausbilden.

Bei einem mehrstufigen Fluidheizer sind mehrere Heizelemente in dem Gehäuse aufgenommen, wobei Heizelementen jeweils ein Kondensator der vorbeschriebenen Bauweise zugeordnet sein kann.

Bei einem Ausführungsbeispiel der Erfindung ist der Fluidheizer mit einem die Fluidströmung bestimmenden Innenrohr ausgeführt, das seinerseits in mehrere galvanische Bereiche getrennt werden kann, denen jeweils ein Heizelement zugeordnet ist.

Der Fluidheizer ist besonders einfach aufgebaut, wenn das Heizelement ein gewendelter Rohrheizkörper ist, der mit einem Heizdraht (Widerstandsdraht) ausgeführt ist, der in einem Mantelrohr angeordnet und gegenüber diesem mittels einer Isolierung, beispielsweise aus MgO isoliert ist.

Selbstverständlich können die Heizelemente auch andere Bauformen aufweisen.

Das Fluid kann beispielsweise mit Glykol versetztes Wasser sein.

Wie vorstehend erläutert, ist der Fluidheizer vorzugsweise mit einer Leistungselektronik ausgeführt, die in Abhängigkeit von der Kapazität des Kondensators bzw. vom Füllstand die Heizelemente ansteuert und ggf. ein Warnsignal abgibt.

Bevorzugte Ausführungsbeispiele der Erfindung werden im Folgenden anhand schematischer Zeichnungen näher erläutert. Es zeigen:
Figur 1 eine Explosionsdarstellung eines Ausführungsbeispiels eines erfindungsgemäßen Fluidheizers;
Figur 2 einen Querschnitt durch einen Fluidheizer gemäß Figur 1;
Figur 3 einen Längsschnitt des Fluidheizers gemäß Figur 1 und
Figuren 4 bis 11 schematische Darstellung von Möglichkeiten, Komponenten eines Fluidheizers gemäß den Figuren 1 bis 3 als Kondensator zu verschalten.

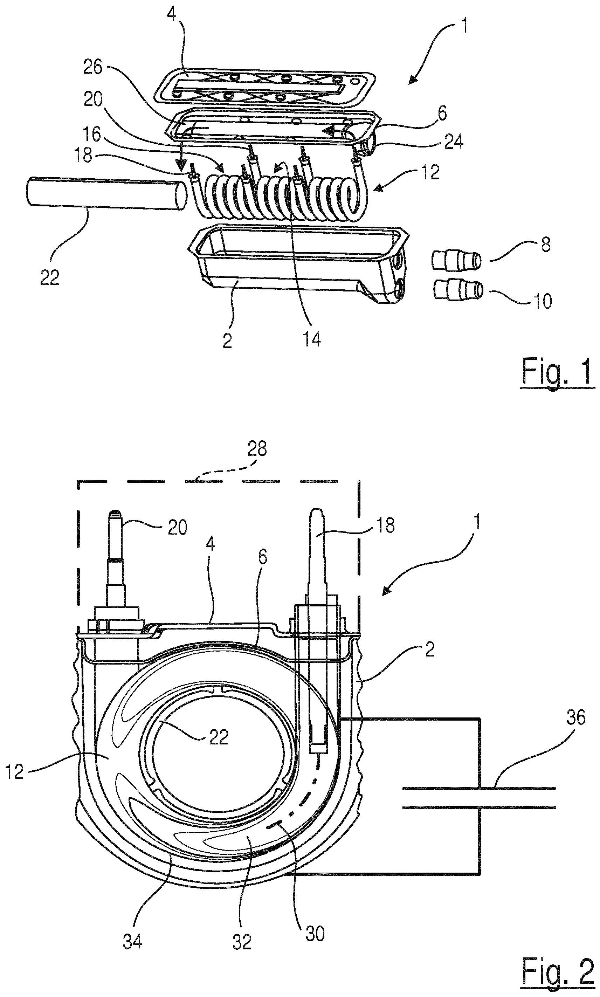

Figur 1 zeigt eine Explosionsdarstellung einiger zum Verständnis der Erfindung wesentlicher Komponenten eines Fluidheizers 1. Demgemäß hat dieser ein mehrteiliges fluidführendes Gehäuse mit einer Unterschale 2 und einem Deckblech 4, auf das das nicht dargestellte Elektronikgehäuse mit der Leistungselektronik aufgesetzt wird. Bei dem dargestellten Ausführungsbeispiel ist die Unterschale 2 aus einem metallischen Werkstoff ausgeführt und mit dem ebenfalls aus einem metallischen Werkstoff ausgeführten Deckblech 4 verlötet oder in sonstiger Weise verbunden. Parallel zum Deckblech 4 ist in der Unterschale 2 ein Führungsblech 6 angeordnet, auf dessen Funktion später eingegangen wird.

Das Fluid wird über einen Zulauf 8 in den von der Unterschale 2 und dem Deckblech 4 bzw. dem Führungsblech 6 begrenzten Innenraum geleitet und strömt dann erwärmt über einen in Figur 1 unten liegenden Ablauf 10 ab. Zulauf 8 und Ablauf 10 sind jeweils als Rohrstutzen ausgeführt, die an die Unterschale 2 angesetzt sind und an die ihrerseits Fluidleitungen angeschlossen sind.

Das Erwärmen des Fluids erfolgt über drei in Reihe angeordnete Heizelemente 12, 14, 16, deren Anschlüsse 18, 20 (nur zwei Anschlüsse in Figur 1 mit Bezugszeichen versehen) durch Ausnehmungen des Führungsblechs 6 und des Deckblechs 4 hindurch dichtend in das nicht dargestellte Elektronikgehäuse eintauchen und dort mit der Leistungselektronik kontaktiert sind.

Beim dargestellten Ausführungsbeispiel sind die Heizelemente 12, 14, 16 als wendelförmige Rohrheizkörper ausgeführt. Der Grundaufbau derartiger Rohrheizkörper ist beispielsweise in der DE 10 2015 118 718 A1 der Anmelderin beschrieben. Ein derartiger Rohrheizkörper hat beispielsweise einen etwa mittig angeordneten Drahtwiderstand (Heizdraht), der koaxial innerhalb eines Mantelrohres angeordnet ist und dabei in eine Isolierschüttung, vorzugsweise bestehend aus MgO eingebettet ist. Weitere Details eines derartigen Rohrheizkörpers werden später anhand von Figur 2 erläutert.

Wie in Figur 1 dargestellt, kragen die Anschlüsse 18, 20 jedes Heizelementes 12 nach oben hin zum Führungsblech 6 und Deckblech 4 aus - diese Anschlüsse 18, 20 sind mit den Drahtwiderstandselementen verbunden.

Die gewendelten Heizelemente 12, 14, 16 umgreifen ein Innenrohr 22, auch Verdrängerrohr genannt, das dafür sorgt, dass das Fluid beim Durchströmen die Heizelemente 12, 14, 16 umströmt und somit in optimalem thermischen Kontakt mit den Heizelementen 12, 14, 16 steht, so dass ein schneller, effektiver Wärmeaustausch gewährleistet ist.

Das Führungsblech 6 hat einen in Figur 1 nach unten hin auskragenden Anschlussstutzen 24, an den der Zulauf 8 angesetzt wird. Das Fluid strömt dann über diesen Zulauf 8 und den Anschlussstutzen 24 zu der in Figur 1 sichtbaren Oberseite des Führungsblechs 6 und strömt weiter in Pfeilrichtung zu einem Durchbruch 26 und tritt durch diesen hindurch nach unten in den eigentlichen Gehäuseinnenraum ein. Das Fluid strömt dann, teilweise geführt vom Innenrohr 22 entlang den Heizelementen 12, 14, 16 hin zum Ablauf 10 und tritt durch diesen erwärmt aus dem Fluidheizer 1 aus.

Figur 2 zeigt einen Querschnitt des Fluidheizers 1 gemäß Figur 1. Man erkennt in dieser Darstellung die wannenartige Unterschale 2, die - wie erläutert - bei diesem Ausführungsbeispiel aus einem metallischen Werkstoff besteht. Die Anschlüsse 18, 20 der Heizelemente (in Figur 2 ist lediglich das Heizelement 12 sichtbar) kragen dann nach oben hin durch das Führungsblech 6 in das gestrichelt angedeutete Elektronikgehäuse 28 hinein und sind dort mit der Leistungselektronik (nicht dargestellt) verbunden. Die Anschlüsse 18, 20 sind mit dem strichpunktiert angedeuteten Drahtwiderstand 30 verbunden. Wie erläutert, ist dieser in einen, beispielsweise aus MgO bestehenden, Isolator 32 eingebettet, der in ein gewendeltes Mantelrohr (metallische Umhüllung des Heizelementes) 34 eingebracht ist.

Gemäß der Darstellung in Figur 2 ist das Innenrohr 22 passgenau in den vom Mantelrohr 34 umgriffenen Raum eingesetzt, so dass der vom Fluid durchströmte Raum im Wesentlichen nach außen durch die Unterschale 2 und das Führungsblech 6 und nach innen hin durch das Innenrohr 22 begrenzt ist.

Wie in Figur 2 angedeutet, erfolgt die Füllstandsmessung durch einen Kondensator 36, der nicht - wie beim Stand der Technik - als zusätzliches Bauelement eingesetzt ist sondern durch ohnehin vorhandene Komponenten des Fluidheizers 1 gebildet wird. Beim dargestellten Ausführungsbeispiel wird eine "Platte"/Elektrode des Kondensators 36 durch das Mantelrohr 34 gebildet. Die Gegenelektrode (weitere "Platte") wird bei dem in Figur 2 angedeuteten Ausführungsbeispiel durch die metallische Unterschale 2 ausgebildet, wobei das in dem vorbeschriebenen Innenraum aufgenommene Fluid das Dielektrikum des Kondensators 36 bildet, dessen Kapazität vom Füllstand abhängig ist.

Dieser Kondensator 36 ist über nicht dargestellte Steuerleitungen mit der Leistungselektronik verschaltet, so dass über eine Auswerteelektronik das erfasste Signal ausgewertet und entsprechend der Füllstand ermittelt werden kann.

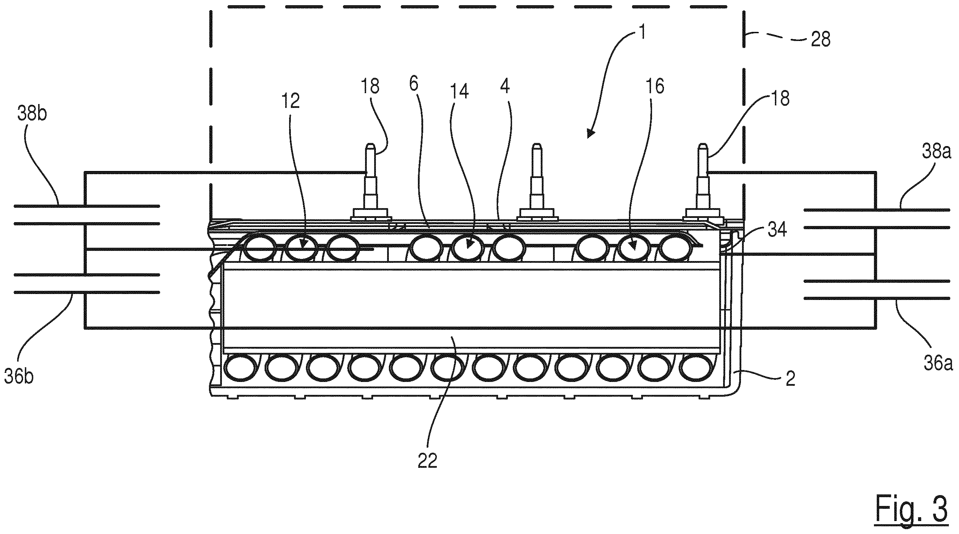

Figur 3 zeigt einen Längsschnitt eines weiteren Ausführungsbeispiels eines Fluidheizers 1. In dieser Darstellung sieht man deutlich die drei Heizelemente 12, 14, 16 mit den jeweiligen Rohrheizkörpern, deren Anschlüsse 18 durch das Führungsblech 6 und das Deckblech 4 in das gestrichelt angedeutete Elektronikgehäuse 28 hineinragen.

Im Bereich der beiden Heizelemente 12, 16 ist jeweils ein Kondensator 36a, 36b ausgebildet, wobei eine Elektrode wiederum durch das Mantelrohr 34 gebildet ist, während die Gegenelektrode bei dem Ausführungsbeispiel gemäß Figur 3 durch das metallische Innenrohr 22 gebildet wird. Bei der Variante gemäß Figur 3 ist jeweils noch ein weiterer Kondensator 38a, 38b ausgebildet, dessen eine Elektrode ("Platte") durch den Drahtwiderstand bzw. den zugeordneten Anschluss 18 ausgebildet ist, während die andere "Platte" (Gegenelektrode) des Kondensators 38a dann wiederum durch das Mantelrohr 34 gebildet ist. Das Dielektrikum dieses Kondensators 38 a,b ist dann durch die Isolation ausgebildet.

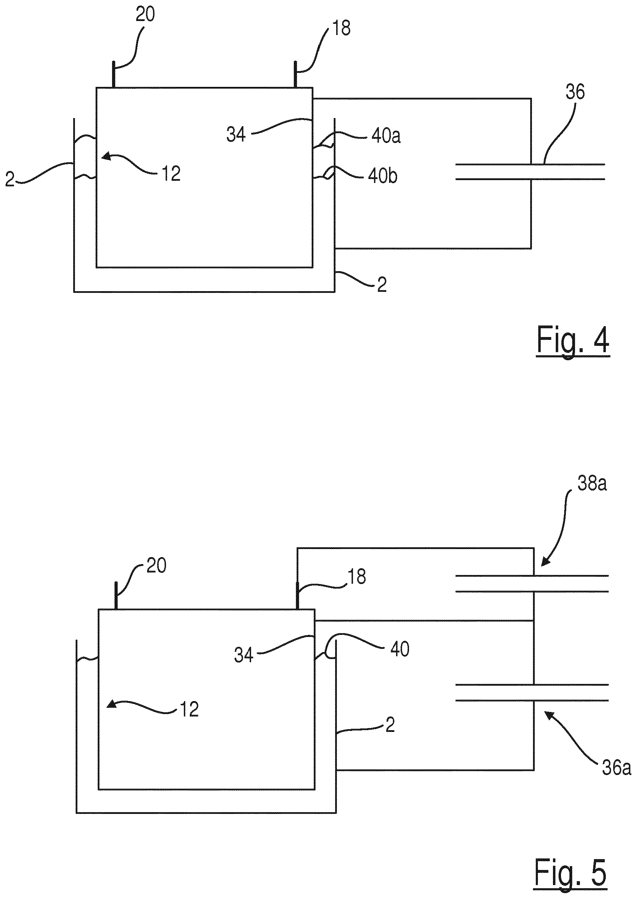

Wie auch anhand der weiteren Figuren 4 bis 12 verdeutlicht, werden erfindungsgemäß ohnehin vorhandene Komponenten des Fluidheizers 1 verwendet, um eine kapazitive Füllstandsmessung zu ermöglichen. Figur 4 zeigt nochmals ein Schaltschema des anhand Figur 2 erläuterten Ausführungsbeispiels, wobei die Unterschale 2 und eines der Heizelemente 12 stark vereinfacht dargestellt sind. Anstelle der kreisförmigen realen Wendelung gemäß Figur 2 ist der Rohrheizkörper in den Figuren 4 bis 11 durch einen rechteckförmigen Rahmen symbolisiert.

Die Anschlüsse 18, 20 des Heizelementes 12 sind ebenfalls nur angedeutet. Wie bereits anhand Figur 2 erläutert, wird eine Elektrode ("Platte") des Kondensators 36 durch das Mantelrohr 34 des Heizelementes 12 gebildet, während die Gegenelektrode (weitere "Platte") durch die metallische Unterschale 2 des Gehäuses ausgebildet ist.

Zwischen diesen beiden Kondensatorplatten befindet sich das Fluid, dessen Füllstand 40a, 40b beispielhaft in zwei Zuständen dargestellt ist. Je nach Füllstand 40a, 40b ändert sich aufgrund der unterschiedlichen Dielektrizitätskonstanten von Luft und Wasser (Glykol) die Kapazität des Kondensators 36, so dass über die Leistungselektronik ein entsprechendes Signal ausgewertet werden kann. Dieses Grundprinzip gilt für alle im Folgenden beschriebenen Varianten.

Beim Ausführungsbeispiel gemäß Figur 5 werden zwei Kondensatoren 36a, 38a in Reihe geschaltet, wobei eine Elektrode des Kondensators 38a durch den Anschluss 18, d.h. durch den Drahtwiderstand (Heizdraht) gebildet ist, während die Gegenelektrode des Kondensators 38a durch das Mantelrohr 34 ausgeführt ist. Ein Vorteil einer derartigen Lösung ist, dass der ohnehin vorhandene Anschluss 18 auch zur Kontaktierung des Kondensators 38a mit der Leistungselektronik verwendet werden kann, so dass keine zusätzlichen Kontaktkomponenten vorgesehen werden müssen.

Eine Elektrode des weiteren Kondensators 36a ist ebenfalls durch das Mantelrohr 34 ausgebildet. Die weitere Gegenelektrode des zweiten Kondensators 36a ist bei dem in Figur 5 dargestellten Ausführungsbeispiel wiederum durch die Unterschale 2 ausgeführt.

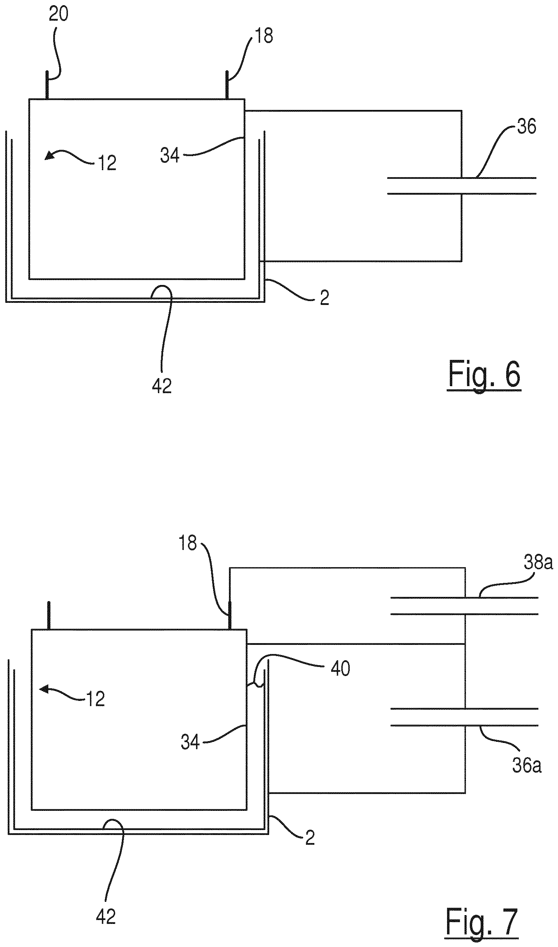

Beim Ausführungsbeispiel gemäß Figur 6 ist die Unterschale 2 aus einem nicht leitenden Kunststoff hergestellt. Die Elektrode des Kondensators 36 wird dann durch ein mit der Unterschale 2 verbundenes metallisches Elektrodenelement 42 ausgebildet, das beispielsweise ein in das Kunststoffmaterial eingelegtes Blech oder eine eingelegte Platte, eine metallische Folie oder eine metallische Beschichtung sein kann, die somit die Gegenelektrode des Kondensators 36 ausbildet. Die weitere Elektrode des Kondensators 36 kann dann wiederum durch das Mantelrohr 34 ausgeführt sein.

Figur 7 zeigt dann eine Variante, deren Grundaufbau bereits in Figur 5 dargestellt ist. Dabei wird jedoch anstelle der metallischen Unterschale 2, wie beim Ausführungsbeispiel gemäß Figur 4, eine Unterschale 2 aus Kunststoff verwendet, die mit einem metallischen Elektrodenelement 42 versehen ist, um die Funktion einer Kondensatorplatte übernehmen zu können. Das Ausführungsbeispiel gemäß Figur 7 entspricht im Übrigen demjenigen aus Figur 5, so dass weitere Erläuterungen entbehrlich sind.

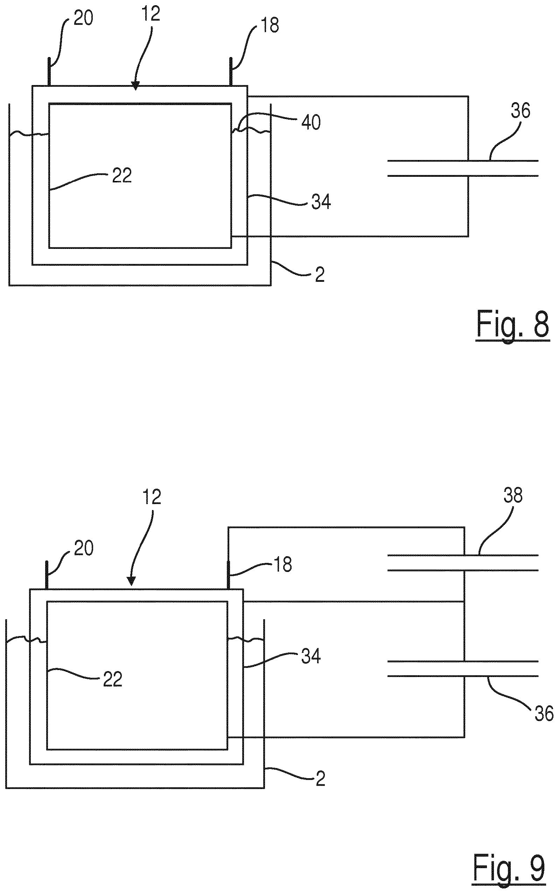

Figur 8 zeigt eine Variante, bei der das ebenfalls rechteckförmig symbolisierte Innenrohr 22 eine Gegenelektrode des Kondensators 36 ausbildet, während die andere Elektrode wiederum durch das Mantelrohr 34 ausgeführt ist. Die Unterschale 2 ist dabei kein Teil des Kondensators 36.

Das Innenrohr 22 kann dann seinerseits aus einem metallischen Material oder auch aus Kunststoff hergestellt sein. Im letztgenannten Fall wird dann das Innenrohr 22 - ähnlich wie die Unterschale 2 bei den Ausführungsbeispielen gemäß den Figuren 6 und 7 - durch eine Beschichtung, eine eingelegte Folie oder ein eingelegtes metallisches Elektrodenelement ausgeführt.

Figur 9 zeigt ein Ausführungsbeispiel, bei dem - ähnlich wie bei den Ausführungsbeispielen gemäß den Figuren 5 und 7 - wiederum zwei Kondensatoren 36, 38 ausgeführt sind, wobei die Elektroden/Platten des Kondensators 38 einerseits durch den Anschluss 18 (Drahtwiderstand) und andererseits durch das Mantelrohr 34 ausgebildet sind. Die Gegenelektrode des zweiten, in Reihe geschalteten Kondensators 36 ist - wie beim Ausführungsbeispiel gemäß Figur 7 - durch das Innenrohr 22 ausgeführt, während die weitere Elektrode auch durch das Mantelrohr 34 ausgebildet wird.

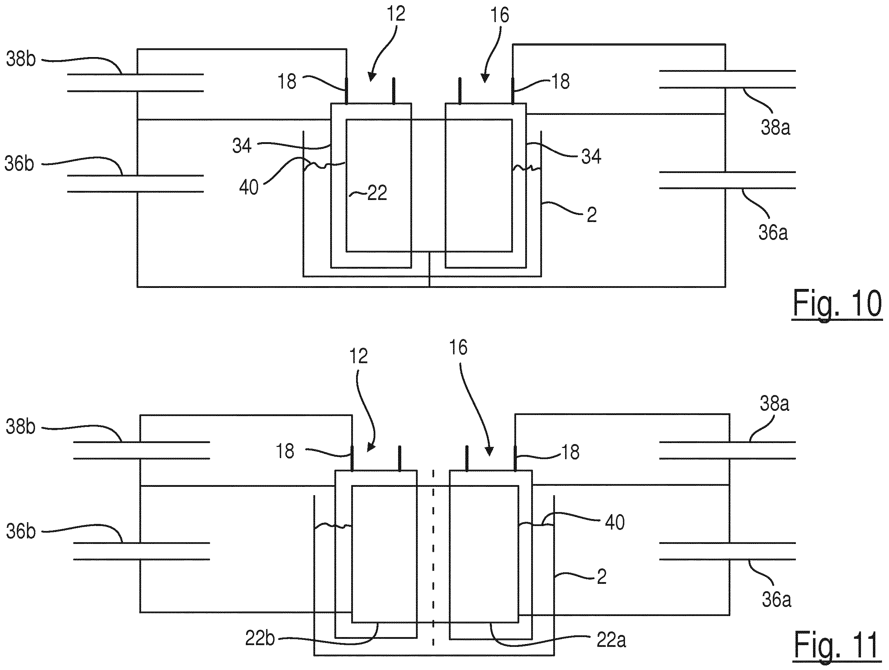

Die Figuren 10 und 11 zeigen Prinzipdarstellungen von Ausführungsbeispielen mit zwei Heizelementen 12, 16. Abgesehen von der Anzahl der Heizelemente entspricht das Ausführungsbeispiel gemäß Figur 10 im Grundaufbau demjenigen aus Figur 3. Jedem der Heizelemente 12, 16 sind zwei in Reihe geschaltete Kondensatoren 36a, 38a; 36b, 38b zugeordnet, wobei die Elektroden/Platten des Kondensators 38a, 38b jeweils durch den Anschluss 18 (Drahtwiderstand) einerseits und das Mantelrohr 34 des jeweiligen Heizelementes 12, 16 andererseits ausgebildet sind. Die Elektroden des jeweils weiteren Kondensators 36a, 36b sind dann entsprechend wiederum durch das Mantelrohr 34 und das Innenrohr 22 ausgeführt. Auch bei diesem Ausführungsbeispiel ist durch die Unterschale 2 kein Kondensatorelement ausgebildet. Wie in Figur 10 dargestellt, bildet dabei das Innenrohr 22 eine beiden Kondensatoren 36a, 36b gemeinsame Elektrode aus.

Figur 11 zeigt eine Variante, bei der das Innenrohr entsprechend der Anzahl der Heizelemente 12, 16 galvanisch in Innenrohrbereiche 22a, 22b getrennt ist. Diese galvanische Trennung ist in Figur 11 durch die gestrichelte Vertikale angedeutet. Die Ausbildung der Kondensatoren 36a, 38a, 36b, 38b erfolgt dann wiederum entsprechend Figur 10, wobei die gehäuseseitige Gegenelektrode der Kondensatoren 36a, 36b durch die jeweils zugeordneten galvanisch getrennten Bereiche des Innenrohrs 22a bzw. 22b gebildet sind. Der sonstige Aufbau entspricht dem Ausführungsbeispiel gemäß den Figuren 10 und 3, so dass weitere Erläuterungen entbehrlich sind.

Auch bei dem in den Figuren 10 und 11 dargestellten Ausführungsbeispiel wird ein Anschluss 18 zur Ausbildung/Kontaktierung einer Kondensatorkomponente genutzt, so dass der vorrichtungstechnische Aufbau einer derartigen Lösung einfacher ist als bei einer Lösung, bei der zusätzliche Kontaktierungselemente für die integrierten Kondensatoren 36, 38 vorgesehen sein müssen.

Offenbart ist ein Fluidheizer 1 mit einer kapazitiven Füllstandsmessung.

### Bezugszeichenliste:

- 1: Fluidheizer
- 2: Unterschale
- 4: Deckblech
- 6: Führungsblech
- 8: Zulauf
- 10: Ablauf
- 12: Heizelement
- 14: Heizelement
- 16: Heizelement
- 18: Anschluss
- 20: Anschluss
- 22: Innenrohr
- 24: Anschlussstutzen
- 26: Durchbruch
- 28: Elektronikgehäuse
- 30: Drahtwiderstand
- 32: Isolierung
- 34: Mantelrohr
- 36: Kondensator
- 38: Kondensator
- 40: Füllstand
- 42: metallisches Elektrodenelement

## Patentansprüche

1. Fluidheizer mit einem von einem Fluid durchströmbaren Gehäuse, in dem zumindest ein Heizelement (12, 14, 16) zum Erwärmen des Fluids aufgenommen ist, **dadurch gekennzeichnet, dass** zumindest zwei zueinander beabstandete, gehäuseseitige und heizelementseitige Komponenten eine Elektrode bzw. eine Gegenelektrode eines Kondensators (36) bilden, dessen Dielektrikum durch das Fluid gebildet ist und der derart mit einer Leistungselektronik verschaltet ist, dass aus einer Kapazitätsänderung des Kondensators (36) der Füllstand (40) des Fluidheizers (1) ermittelbar ist.

2. Fluidheizer nach Patentanspruch 1, wobei die gehäuseseitige Komponente eine Gehäusewandung, vorzugsweise eine Unterschale (2) oder ein Innenrohr (22) ist, welches vom Heizelement (12, 14, 16) umgriffen ist.

3. Fluidheizer nach Patentanspruch 1 oder 2, wobei die heizelementseitige Komponente eine metallische Umhüllung, beispielsweise ein Mantelrohr (34) oder ein Heizdraht des Heizelementes (12, 14, 16) ist.

4. Fluidheizer nach Patentanspruch 2, wobei die Gehäusewandung aus Kunststoff besteht und mit einer Beschichtung oder einem elektrisch leitenden Element wie beispielsweise einem Elektrodenblech, einer Elektrodenfolie oder dergleichen versehen ist.

5. Fluidheizer nach einem der vorhergehenden Patentansprüche, wobei Elektroden und Gegenelektroden zumindest zwei in Reihe geschaltete Kondensatoren (36, 38) bilden.

6. Fluidheizer nach einem der Patentansprüche 2 bis 5, wobei mehrere Heizelemente (12, 14, 16) in dem Gehäuse aufgenommen sind, wobei Heizelementen (12, 14, 16) jeweils zumindest ein Kondensator (36, 38) zugeordnet ist.

7. Fluidheizer nach Patentanspruch 6, wobei das Innenrohr (22) mehrere galvanisch getrennte Innenrohrabschnitte (22a, 22b) hat, die jeweils einem Heizelement (12, 14, 16) als Gegenelektrode zugeordnet sind.

8. Fluidheizer nach einem der vorhergehenden Patentansprüche, wobei das Heizelement (12, 14, 16) ein, vorzugsweise gewendelter, Rohrheizkörper mit einem Drahtwiderstand/Heizdraht ist, der in einem Mantelrohr (34) angeordnet ist und gegenüber diesem mittels einer Isolierung (32) beabstandet ist.

## Claims

1. A fluid heater having a housing through which a fluid can flow and in which at least one heating element (12, 14, 16) for heating the fluid is accommodated, **characterized in that** at least two housing-side and heating-element-side components spaced apart from each other form an electrode or a counter electrode of a capacitor (36) whose dielectric is formed by the fluid and which is connected to power electronics in such a way that the fill level (40) of the fluid heater (1) can be determined from a change in capacitance of the capacitor (36).

2. The fluid heater according to claim 1, wherein the housing-side component is a housing wall, preferably a lower shell (2) or an internal pipe (22), which is surrounded by the heating element (12, 14, 16).

3. The fluid heater according to claim 1 or 2, wherein the heating-element-side component is a metallic sheath, for example a casing tube (34) or a heating wire of the heating element (12, 14, 16).

4. The fluid heater according to claim 2, wherein the housing wall is made of plastic and is provided with a coating or an electrically conductive element such as an electrode sheet, an electrode foil or the like.

5. The fluid heater according to one of the preceding claims, wherein electrodes and counter electrodes form at least two capacitors (36, 38) connected in series.

6. The fluid heater according to one of claims 2 to 5, wherein a plurality of heating elements (12, 14, 16) are accommodated in the housing, wherein at least one capacitor (36, 38) is associated with each heating element (12, 14, 16).

7. The fluid heater according to claim 6, wherein the internal pipe (22) has a plurality of galvanically separated internal pipe portions (22a, 22b), each of which is assigned to a heating element (12, 14, 16) as a counter electrode.

8. The fluid heater according to one of the preceding claims, wherein the heating element (12, 14, 16) is a, preferably coiled, tubular heating element with a wire resistor/heating wire, which is arranged in a casing tube (34) and is spaced apart from the latter via an insulation (32).

## Revendications

1. Appareil de chauffage de fluide avec un boîtier pouvant être traversé par un fluide, dans lequel au moins un élément chauffant (12, 14, 16) est reçu pour le chauffage du fluide, **caractérisé en ce qu'**au moins deux composants côté élément chauffant et côté boîtier, espacés l'un de l'autre forment une électrode ou une contre-électrode d'un condensateur (36), dont le diélectrique est formé par le fluide et qui est câblé avec une électronique de puissance de telle manière que le niveau de remplissage (40) de l'appareil de chauffage de fluide (1) puisse être déterminé à partir d'une modification de capacité du condensateur (36).

2. Appareil de chauffage de fluide selon la revendication 1, dans lequel le composant côté boîtier est une paroi de boîtier, de préférence une coque inférieure (2) ou un tube intérieur (22) qui est entouré par l'élément chauffant (12, 14, 16).

3. Appareil de chauffage de fluide selon la revendication 1 ou 2, dans lequel le composant côté élément chauffant est une enveloppe métallique, par exemple un tube d'enveloppe (34) ou un fil de chauffage de l'élément chauffant (12, 14, 16).

4. Appareil de chauffage de fluide selon la revendication 2, dans lequel la paroi de boîtier se compose de plastique et est pourvue d'un revêtement ou d'un élément électroconducteur comme une tôle d'électrode, un film d'électrode ou similaire.

5. Appareil de chauffage de fluide selon l'une quelconque des revendications précédentes, dans lequel des électrodes et des contre-électrodes forment au moins deux condensateurs (36, 38) montés en série.

6. Appareil de chauffage de fluide selon l'une des revendications 2 à 5, dans lequel plusieurs éléments chauffants (12, 14, 16) sont logés dans le boîtier, dans lequel au moins un condensateur (36, 38) est associé respectivement aux éléments chauffants (12, 14, 16).

7. Appareil de chauffage de fluide selon la revendication 6, dans lequel le tube intérieur (22) présente plusieurs sections de tube intérieur (22a, 22b) séparées de manière galvanique qui sont associées respectivement à un élément chauffant (12, 14, 16) comme contre-électrode.

8. Appareil de chauffage de fluide selon l'une quelconque des revendications précédentes, dans lequel l'élément chauffant (12, 14, 16) est un élément chauffant tubulaire de préférence bobiné avec une résistance bobinée/fil de chauffage qui est agencé dans un tube d'enveloppe (34) et est espacé par rapport à celui-ci au moyen d'une isolation (32).
